(19)

Europäisches
Patentamt
European
Patent Office
Office européen
des brevets

(11) **EP 2 466 526 A1**

(12) **EUROPEAN PATENT APPLICATION**

(43) Date of publication:
**20.06.2012   Bulletin 2012/25**

(51) Int Cl.:
*G06K 9/00* (2006.01)

(21) Application number: **10275129.4**

(22) Date of filing: **16.12.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(71) Applicant: **BAE Systems PLC**<br>**London SW1Y 5AD (GB)** | (72) Inventor: **The designation of the inventor has not yet been filed**<br><br>(74) Representative: **BAE SYSTEMS plc**<br>**Group IP Department**<br>**P.O. Box 87**<br>**Warwick House**<br>**Farnborough Aerospace Centre**<br>**Farnborough**<br>**Hampshire GU14 6YU (GB)** |

(54) **Predicting population distributions using measured values**

(57)    A method and apparatus for processing a distribution of a population (4) distributed over a region of interest (2), the region (2) being divided into cells, the method comprising: measuring, at two different points in time, values of a measure of population intensity in each cell; for a cell, determining a vector of values, each value in the vector being a function of the intensity values measured in that cell and the population intensity values measured in a different cell; determining a matrix using the determined vector(s) and the population intensity values measured at one of the different points in time; and predicting, using the matrix and the value of the population intensity measured in a cell at either of the different points in time, a value for the measure of population intensity in that cell for a point in time different to the two different points in time.

FIG. 1

EP 2 466 526 A1

**Description**

FIELD OF THE INVENTION

The present invention relates to the processing of a distribution of a population.

BACKGROUND

Techniques exist for the long-term processing of distributions of large populations i.e. finite or infinite collections of items under consideration. Also, techniques exist for the analysis of the behaviour of individuals or small groups of people over short timescales (for example tracking techniques) or over long timescales (for example long-term surveillance techniques).

However, the monitoring of large groups of people over relatively short timescales tends not to be adequately provided by the aforementioned techniques.

Nevertheless, situations occur, for example at public gatherings or following major disasters, where there is a requirement for monitoring of large groups of people over relatively short timescales, for example to enable authorities to make time critical decisions about where crowd flows or densities are unsafe or threatening.

Moreover, there is a requirement for the ability to predict crowd dispersion at future times so that pre-emptive decisions may be taken by authorities, for example to ensure the safety or security of the crowd.

SUMMARY OF THE INVENTION

In a first aspect the present invention provides a method for processing a distribution of a population, the population being distributed over a region of interest, the region of interest being divided into a plurality of cells, the method comprising: measuring, at two different points in time, respective values of a measure of population intensity in each cell of a plurality of the cells; for a cell in the plurality, determining a vector of values, wherein each value in the vector is a function of the population intensity values measured in that cell at the two different points in time and the population intensity values measured in a different cell at the two different points in time; determining a matrix using the determined vector(s) of values and using the population intensity values measured at one of the two different points in time in the cells for which the vectors of values were determined; and predicting, using the determined matrix and using the value of the population intensity measured in a cell in the plurality at either of the two different points in time, a value for the measure of population intensity in that cell for a point in time different to the two different points in time.

The step of determining a matrix may be performed using the population intensity values measured at the earlier of the two different points in time in the cells for which the vectors of values were determined.

A value in a vector of values may be a flux value determined using the formula:

$$Fl_{ij} = \frac{1}{2}\left(\Delta m_i(t) - \Delta m_j(t)\right)$$

where:

$Fl_{ij}$ is a flux value of the flux between the an $i$th cell and a $j$th cell; and

$$\Delta m_i(t) = m_i(t') - m_i(t) \text{ and } \Delta m_j(t) = m_j(t') - m_j(t)$$

where:

$m_i(t)$ is the measured value of the measure of population intensity in the $i$th cell at a time t;
$m_i(t')$ is the measured value of the measure of population intensity in the $i$th cell at a time t';
$m_j(t)$ is the measured value of the measure of population intensity in the $j$th cell at the time t; and
$m_j(t')$ is the measured value of the measure of population intensity in the jth cell at the time t'.

The vector of flux values may be determined as:

$$\underline{Fl}_i(t) = \left(Fl_{i1}, \ldots, Fl_{im}\right)$$

where: $Fl_{ij}$ for $j \in \{1, \ldots, m\}$ are flux values of the flux between the $i$th cell and the $j$th cell, wherein the $j$th cell is a cell in the set of cells that influence the value of the measure of population intensity in the $i$th cell between the two different points in time.

A vector of values may be determined as:

$$\underline{Fl}_i^+(t) = \left[ \mathrm{I}_i(j) \cdot \frac{1}{2}\left(\Delta m_i(t) - \Delta m_j(t)\right) \right]_j$$

where:

$$\Delta m_i(t) = m_i(t') - m_i(t) \ \text{and} \ \Delta m_j(t) = m_j(t') - m_j(t)$$

where: $m_i(t)$ is the measured value of the measure of population intensity in the $i$th cell at a time t;

$m_i(t')$ is the measured value of the measure of population intensity in the $i$th cell at a time t';
$m_j(t)$ is the measured value of the measure of population intensity in the $j$th cell at the time t; and
$m_j(t')$ is the measured value of the measure of population intensity in the jth cell at the time t'; and
$\mathrm{I}_i(j)$ is an indicator function:

$$\mathrm{I}_i(j) = \begin{cases} 1 & j \in nbhd(i) \\ 0 & j \notin nbhd(i) \end{cases}$$

where $nbhd(i)$ is a set of cells that influence the value of the measure of population intensity in the $i$th cell between the two different points in time.

The step of determining a matrix may comprise determining a matrix:

$$\underline{\underline{D}}(t) = \begin{bmatrix} \underline{PFl}_1(t) \\ \vdots \\ \underline{PFl}_n(t) \end{bmatrix}, \text{ where } \underline{PFl}_i(t) = \begin{cases} 0 & m_i(t) = 0 \\ \dfrac{1}{m_i(t)}\underline{Fl}_i^+(t) & m_i(t) \neq 0 \end{cases}$$

The step of determining a matrix may comprise determining a matrix $D^t$ as either:

$$\underline{\underline{D}}^t = \frac{1}{t+1}\left[\underline{D}(0) \oplus \underline{D}(1) \oplus \ldots \oplus \underline{D}(t)\right]$$

or

3

$$\underline{\underline{D}}^{t} = \frac{1}{t+1}\left[\underline{\underline{D}}(t) \oplus t \cdot \underline{\underline{D}}^{t-1}\right] = \frac{1}{t+1} \cdot \underline{\underline{D}}(t) \oplus \frac{t}{t+1} \cdot \underline{\underline{D}}^{t-1}$$

or

$$\underline{\underline{D}}^{t} = \frac{1}{n+1}\left[\underline{\underline{D}}(t-n) \oplus \underline{\underline{D}}(t-n+1) \oplus \dots \oplus \underline{\underline{D}}(t)\right]$$

or

$$\underline{\underline{D}}^{t} = \underline{\underline{D}}^{t-1} \oplus \frac{1}{n+1} \cdot \left[\underline{\underline{D}}(t) \oplus -\underline{\underline{D}}(t-n-1)\right]$$

or

$$\underline{\underline{D}}^{t} = \frac{1}{m+1}\left[\underline{\underline{D}}(T) \oplus \underline{\underline{D}}(T+1) \oplus \dots \oplus \underline{\underline{D}}(t)\right]$$

or

$$\underline{\underline{D}}^{t} = \frac{1}{m+1}\left[\underline{\underline{D}}(t) \oplus m \cdot \underline{\underline{D}}^{t-1}\right] = \frac{1}{m+1} \cdot \underline{\underline{D}}(t) \oplus \frac{m}{m+1} \cdot \underline{\underline{D}}^{t-1}$$

where:

$n$ is a number of prior time-steps to average over, with $0 \leq n < t;$
$m = t - T$ for $T$ a threshold value such that $0 \leq T < t;$ and

$$\underline{D}(t) = \begin{bmatrix} \underline{PFl}_{1}(t) \\ \vdots \\ \underline{PFl}_{n}(t) \end{bmatrix}, \text{ where } \underline{PFl}_{i}(t) = \begin{cases} 0 & m_{i}(t) = 0 \\ \dfrac{1}{m_{i}(t)}\underline{Fl}_{i}^{+}(t) & m_{i}(t) \neq 0 \end{cases}$$

The step of predicting a value for the measure of population intensity in that cell for a point in time different to the two different points in time may comprise determining:

$$\widetilde{\underline{m}}(t+s) = \underline{m}(t) \cdot \left(\underline{\underline{D}}*(t)\right)^{s}$$

where:

$\underline{D}^*(t) = (Id \oplus \underline{D}(t))$ where $Id$ is the identity matrix; and
$s$ is a number of time-steps.

The step of predicting a value for the measure of population intensity in that cell for a point in time different to the two different points in time may comprise determining:

$$\underline{\widetilde{m}}(t + s) = \underline{m}(t) \cdot \left( \left( \underline{D}^* \right)^t \right)^s$$

where:

$(\underline{D}^*)^t = (Id \oplus \underline{D}^t)$ where $Id$ is the identity matrix; and
$s$ is a number of time-steps.

The measure of population intensity may be a number of people.
In a further aspect, the present invention provides a method of managing a population distribution for a population distributed over a plurality of cells, the method comprising: a method for processing a distribution of a population according to any of the above aspects; and performing an act based on the predicted values of the measure of population intensity.
In a further aspect, the present invention provides apparatus for processing a distribution of a population, the population being distributed over a region of interest, the region of interest being divided into a plurality of cells, the apparatus comprising a processor for performing a method according to any of the above aspects, and sensing means for measuring a value of a measure of population intensity in each of the plurality of the cells at two different points in time.
In a further aspect, the present invention provides apparatus for managing a population distribution for a population distributed over a plurality of cells, the apparatus comprising: an apparatus for processing a population distribution for a population according to the above aspect; and means for performing an act based on the predicted values of the measure of population intensity such that the actual value of the measure of population intensity at the point in time different to the two different points is different to the predicted value of the measure of population intensity.
In a further aspect, the present invention provides a program or plurality of programs arranged such that when executed by a computer system or one or more processors it/they cause the computer system or the one or more processors to operate in accordance with the method of any of claims the above aspects.
In a further aspect, the present invention provides a machine readable storage medium storing a program or at least one of the plurality of programs according to the above aspect.

BRIEF DESCRIPTION OF THE DRAWINGS

Figure 1 is a schematic illustration of an example crowd monitoring scenario;

Figure 2 is a process flowchart showing certain steps of an embodiment of a crowd monitoring algorithm;

Figure 3 is a schematic illustration of a cell lattice defined over an area of interest;

Figure 4 is a schematic illustration of an example categorisation of the cell lattice over the area of interest at a particular time;

Figure 5 is a schematic illustration of an example categorisation of the cell lattice over the area of interest at a different particular time;

Figure 6 is a process flowchart showing certain steps of an embodiment of a flux vector determination process; and

Figure 7 is a schematic illustration of the cells of the cell lattice at the different times.

DETAILED DESCRIPTION

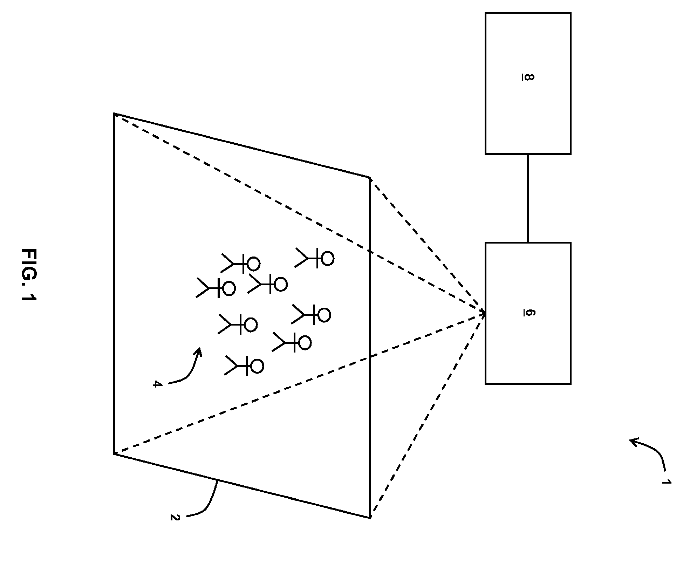

Figure 1 is a schematic illustration (not to scale) of an example crowd monitoring scenario 1.

The crowd monitoring scenario comprises a crowd of people, hereinafter referred to as "the crowd 4", within an area of interest 2.

The number of individuals in the crowd 4, in this embodiment, is such that the monitoring of a particular individual within the crowd 4 is infeasible (e.g. due to the number or density of members in the crowd). This may conveniently be referred to herein as a "relatively large crowd". Thus in this embodiment, the people in the crowd 4 represent a population whose distribution is to be processed.

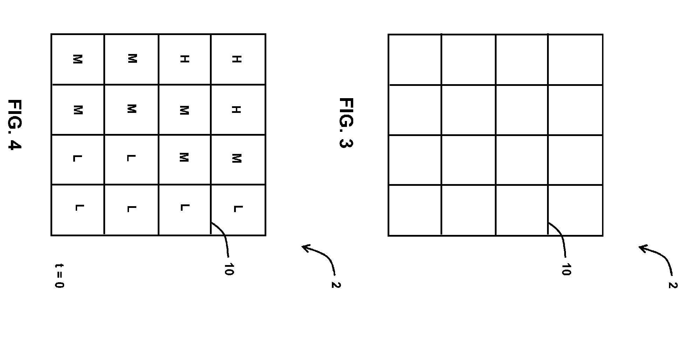

A sensor 6 generates data corresponding to the distribution of the crowd 4 in the area of interest 2 as described in more detail later below. In this embodiment, the sensor 6 is an infra-red sensor. The sensor 6 measures an infra-red intensity level in each of the cells in a cell lattice that covers area of interest 2, as described in more detail later below with reference to Figure 3. This data is sent from the sensor 6 to a processor 8.

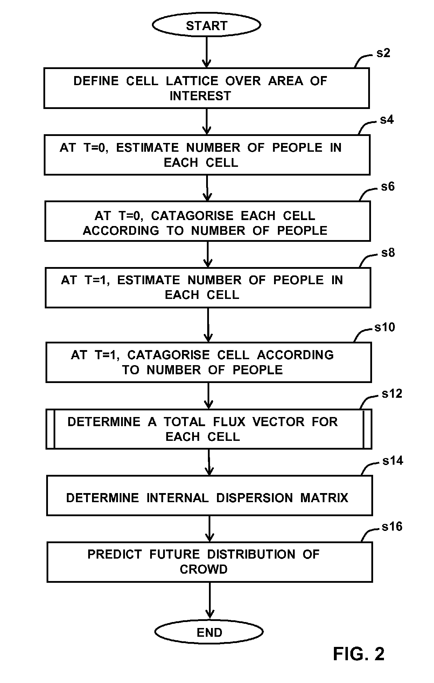

The generated data is processed by the processor 8 to determine a prediction of the distribution of the crowd 4 in the area of interest 2 at a future point in time, as described in more detail later below with reference to Figure 2.

Figure 2 is a process flowchart showing certain steps of an embodiment of a crowd monitoring algorithm performed using the sensor 6 and the processor 8.

At step s2, a grid of cells, or cell lattice, is defined over the area of interest 2.

Figure 3 is a schematic illustration (not to scale) of a cell lattice 10 defined over the area of interest 2. In this embodiment the cell lattice 10 is a square four-by-four grid of substantially equally sized cells.

At step s4, for initial time to and for each cell in the cell lattice 10, a value of an "observed cell mass" is estimated. In this embodiment, the observed cell mass of a cell is estimated from an infra-red intensity level measured in that cell by the sensor 6. The infra-red intensity level measured in a cell depends on the number of members of the crowd 4 within that cell. In this embodiment, the observed cell mass is an approximately linear function of the number of members of the crowd 4 within a cell. The value of the observed cell mass for a cell may be a value between zero (if there are no members of the crowd 4 in that cell) and one (if in that cell there is the maximum number of members of the crowd 4 that could feasibly be considered to fit in a cell). The observed cell mass may be considered to be a measure of the extent to which a particular cell is filled by members of the crowd 4.

At step s6, for to each cell of the cell lattice 10 is categorised according to the estimated observed cell mass for that cell. In this embodiment, a cell is categorised according to the risk of there being a danger to the members of the crowd 4 in that cell. In this embodiment, a cell is categorised as "low risk" (denoted hereinafter as "L") if the observed cell mass is between 0 and 0.25. A cell is categorised as "medium risk" (denoted hereinafter as "M") if the observed cell mass is between 0.25 and 0.5. A cell is categorised as "high risk" (denoted hereinafter as "H") if the observed cell mass is between 0.5 and 0.75. Also, a cell is categorised as "critical" (denoted hereinafter as "C") if the observed cell mass is greater or equal to than 0.75. Equivalently:

$$s_i = \begin{cases} L, & 0 \le m_i(t) < 0.25 \\ M, & 0.25 \le m_i(t) < 0.5 \\ H, & 0.5 \le m_i(t) < 0.75 \\ C, & 0.75 \le m_i(t) \end{cases}$$

where:

$s_i$ is the category of the $i$th cell in the cell lattice 10; and
$m_i(t)$ is the estimated density of the $i$th cell in the cell lattice 10 at time t.

In this embodiment, a cell is categorised as one of L, M, H, or C as described above. In other words, the range of possible cell masses from zero to one is partitioned into a number of discrete intervals, and the categorisation of any individual cell is then determined by which interval the cell's mass lies in. In other embodiments, a cell may be categorised depending on its state in a different way to that described for this embodiment. For example, in other embodiments the range of possible cell masses may be partitioned into a series of overlapping intervals, thereby making it possible that, at a certain time, a cell may have more than one categorisation. Also, in other embodiments a cell may be categorised depending upon some function of its state.

Figure 4 is a schematic illustration (not to scale) of an example categorisation of the cell lattice 10 over the area of interest 2 at a time t. Each cell of the cell lattice has been categorised as one of L, M, H, or C as described above.

At step s8, for a future time, i.e. a next time step t+1, and for each cell in the cell lattice 10, a value of the observed cell mass is estimated. The estimation of the observed cell mass in each cell is carried out for t+1 in the same way as that for time t, as described above at step s4.

At step s10, for t+1 each cell of the cell lattice 10 is categorised according to the observed cell mass estimated for that cell. The categorisation of each cell is carried out for t+1 in the same way as that for time t, as described above at step s6.

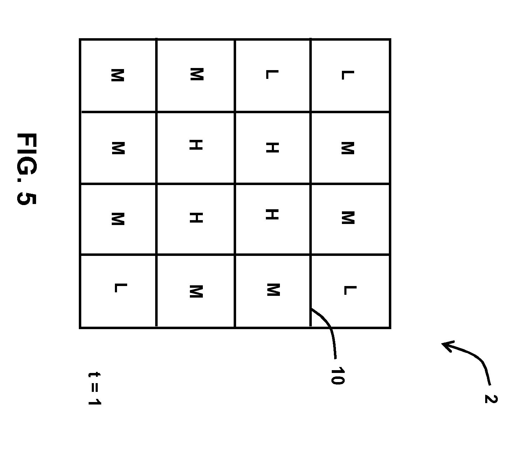

Figure 5 is a schematic illustration of an example categorisation of the cell lattice 10 over the area of interest 2 at time t+1. Each cell of the cell lattice has been categorised as one of L, M, H, or C as described above.

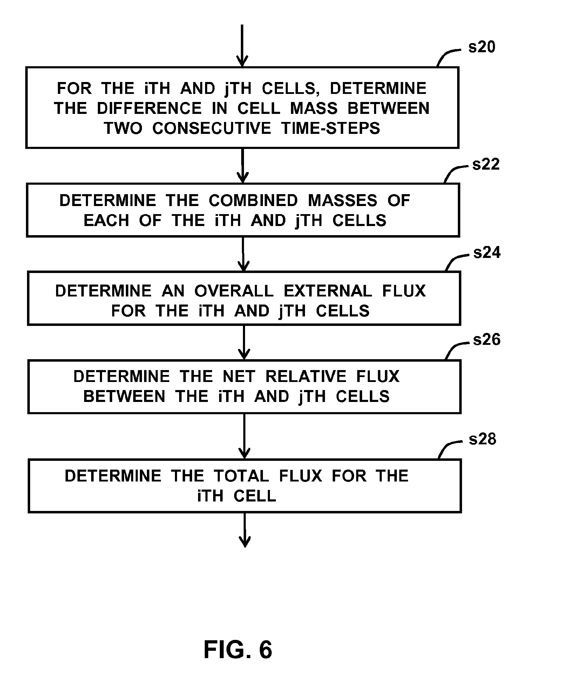

At step s12, for each cell, a "flux vector" is determined for each cell using a flux vector determination process, certain steps of which are described in more detail with reference to Figure 6. The description of steps s14 and s16 of the crowd monitoring algorithm will be described after the description of the flux vector determination process.

Figure 6 is a process flowchart showing certain steps of an embodiment of the flux vector determination process of step s12.

The flux vector determination process will be described for a particular cell in the cell lattice 10, namely the *i*th cell. However, at step s12 the flux vector determination process is carried out for each cell in the cell lattice 10.

In the description of the flux vector determination process for the *i*th cell a further cell, namely the jth cell, is also used. The jth cell is a cell in the neighbourhood of the *i*th cell. The terminology "neighbourhood of the *i*th cell" is used to refer to a set of cells from which members of the crowd 4 may move into the *i*th cell between one time-step and the next, and/or a set of cells into which members of the crowd 4 may move from the *i*th cell between one time-step and the next.

At step s20, for the *i*th and jth cells in the cell lattice 10, the differences between the estimated observed cell masses at time-steps t and t+1 are determined.

For the *i*th cell, the observed cell mass estimates $m_i(t)$ and $m_i(t+1)$ for two consecutive time steps t and t+1 are known (from steps s4 and s8 respectively). Likewise, for a *j*th cell, the observed cell mass estimates $m_j(t)$ and $m_j(t+1)$ are known.

Using these values, the differences in the estimated observed cell masses between time-steps t and t+1 are $\Delta m_i(t) = m_i(t+1) - m_i(t)$ and $\Delta m_j(t) = m_j(t+1) - m_j(t)$ for the *i*th and *j*th cells respectively. $\Delta m_i(t)$ and $\Delta m_j(t)$ are the values of the total flux in or out of the *i*th and jth cells respectively. Positive flux values indicate an increase in the relevant cell's mass over the interval (i.e. a net inward flux) and negative flux values indicate a decrease in the relevant cell's mass over the interval (i.e. a net outward flux).

The movement of cell mass from the *i*th cell relative to the jth cell is $\Delta m_i(t) - \Delta m_j(t)$. This value is the change in mass of the *i*th cell relative to the change in mass of the jth cell. If this relative change in mass value is positive then the relative movement of mass is towards the *i*th cell from the jth cell. Conversely, if this relative change in mass value is negative, the relative movement of mass is away from the *i*th cell towards the jth cell.

At steps s22, the combined mass of the *i*th and jth cells at each of the time-steps t and t+1 are determined as $M_{ij}(t) = m_i(t) + m_j(t)$ and $M_{ij}(t+1) = m_i(t+1) + m_j(t+1)$ respectively.

At step s24, an overall external flux for the *i*th and jth cell pair is determined as $\Delta M_{ij} = (m_i(t+1) + m_j(t+1)) - (m_i(t) + m_j(t))$. Equivalently, the overall external flux for the *i*th and jth cell pair may be determined as $\Delta M_{ij} = M_{ij}(t+1) - M_{ij}(t)$.

$\Delta M_{ij}$ is equivalent to the overall gain or loss of cell mass not attributable to movement between the *i*th and jth cells. In this embodiment, this value is equally accounted for by each cell. In other words, in this embodiment over the interval each of the *i*th and jth cells have an external flux value of $\frac{1}{2}\Delta M_{ij}$ .

At step s26, a net relative flux between the *i*th and jth cells is determined. The following formulae are used:

$$m_i(t+1) = m_i(t) + \frac{1}{2}\Delta M_{ij} + Fl_{ij}$$

$$m_j(t+1) = m_j(t) + \frac{1}{2}\Delta M_{ji} + Fl_{ji}$$

where $Fl_{ij}$ is the flux to the *i*th cell from the jth cell, $Fl_{ji}$ is the flux to the jth cell from the *i*th cell, and $Fl_{ji} = -Fl_{ij}$.

Thus, the net relative flux between the *i*th and *j*th cells is determined as:

$$Fl_{ij} = m_i(t+1) - m_i(t) - \frac{1}{2}\Delta M_{ij}$$

$$= m_i(t+1) - m_i(t) - \frac{1}{2}\left(m_i(t+1) + m_j(t+1)\right) - \left(m_i(t) + m_j(t)\right)$$

$$= \frac{1}{2}\left(\Delta m_i(t) - \Delta m_j(t)\right)$$

Also, the net relative flux between the *j*th and *i*th cells is determined as:

$$Fl_{ji} = \frac{1}{2}\left(\Delta m_j(t) - \Delta m_i(t)\right)$$

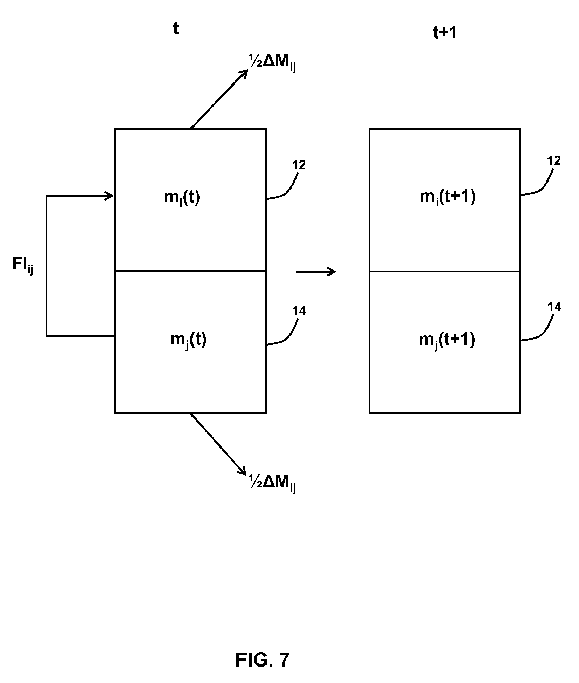

The relationship between the various cell masses and fluxes between the two consecutive time-steps is illustrated in Figure 7.

Figure 7 is a schematic illustration (not to scale) of the *i*th cell 12 and the jth cell 14 at the time-steps t and t+1. Figure 7 illustrates the cell masses of the *i*th cell 12 and the *j*th cell 14 at the time-steps t and t+1 (i.e. the cell masses $m_i(t)$, $m_j(t)$, $m_i(t+1)$, and $m_j(t+1)$ ), a net relative flux between the *i*th cell 12 and the *j*th cell 14, (indicated in Figure 7 by $Fl_{ij}$), and an external flux from each of the *i*th and *j*th cells (each indicated by $\frac{1}{2}\Delta M_{ij}$ ).

At steps s28, the total flux for the *i*th cell is determined as the vector:

$$\underline{Fl}_i(t) = \left(Fl_{i1}, \ldots, Fl_{im}\right)$$

where $Fl_{ij}$ for $j \in \{1,\ldots,m\}$ are as described above, and the indexes j label each of the cells within the neighbourhood of the *i*th cell 12.

Equivalently, the total flux for the *i*th cell is the vector:

$$\underline{Fl}_i(t) = \left[\frac{1}{2}\left(\Delta m_i(t) - \Delta m_j(t)\right)\right]_{j \in nbhd(i)}$$

with the index j $\in$ *nbhd*(*i*) labelling the set of cells that are within the neighbourhood of the *i*th cell 12. This vector describes the approximate local dynamics in the *i*th cell 12. The total flux for the *i*th cell 12, $\underline{Fl}_i(t)$, approximates the crowd dynamics around the *i*th cell 12.

Using the above described flux vector determination process, a total flux vector is determined for each cell in the cell lattice 10. The set of flux vectors together approximate the overall dynamics of the crowd 4 over the area of interest 2.

Returning now to the description of the crowd monitoring algorithm of Figure 2, at step s14 an internal dispersion matrix for the cell lattice 10 defined over the area of interest 2 is determined by combining the total flux vectors determined at step s12 together into a single matrix. This is performed as follows.

Firstly, the total flux vectors calculated at step s12 for the neighbourhood of each cell in cell lattice 10 are extended so that they each account for flux within the whole of area of interest 2. The extended total flux vector for the *k*th cell is:

$$\underline{Fl}_k^{+}(t) = \left[ I_k(l) \cdot \frac{1}{2} \left( \Delta m_k(t) - \Delta m_l(t) \right) \right]_l$$

where the $k$th and $l$th cells are any two cells within cell lattice 10, and where $I_k(l)$ is an indicator function:

$$I_k(l) = \begin{cases} 1 & l \in nbhd(k) \\ 0 & l \notin nbhd(k) \end{cases}$$

Secondly, the extended total flux vectors for each of the cells in cell lattice 10 are arranged as an $n \times n$ matrix:

$$\begin{bmatrix} \underline{Fl}_1^{+}(t) \\ \vdots \\ \underline{Fl}_n^{+}(t) \end{bmatrix}$$ , where n is the number of cells in a row (or column) of the cell lattice 10.

This matrix describes all of the observed internal movements of cell mass between the time-steps t and t+1, with the $(k,l)^{th}$ element of the matrix describing the estimated one time-step flux between the $k$th and $l$th cells, i.e. the quantity of the current mass in the $k$th cell that will be gained from or lost to the $l$th cell by the next time-step).
The fluxes in this matrix are divided by the relevant current cell masses to determine the internal dispersion matrix $\underline{D}(t)$:
At step s16, the distribution of the crowd 4 in the area of interest 2 at a future time-step is predicted.
Using the current and immediately previous distributions of cell mass in the area of interest 2, i.e. $\underline{m}(t = 1)$ and $\underline{m}(t)$ respectively, and the estimation of the dynamics of the crowd 4, i.e. the internal dispersion matrix $\underline{D}(t)$, an estimation of the distribution of cell mass at a future time-step, for example $\underline{m}(t + 2)$, $\underline{m}(t + 3)$ or in general $\underline{m}(T)$ at some future time T, is determined.
A predicted mass distribution for the $k$th cell within cell lattice 10 at time t+1 is determined by:

$$\widetilde{m}_k(t+1) = m_k(t) + \sum_l Fl_{kl}^{+}(t)$$

Thus, using the above definition of the internal dispersion matrix $\underline{\underline{D}}(t)$, an equation for the predicted future mass of each cell $\widetilde{m}_l(t+1)$ in matrix form is:

$$\widetilde{\underline{m}}(t+1) = \underline{m}(t) + \underline{m}(t) \cdot \underline{\underline{D}}(t)$$

$$= \underline{m}(t) \cdot \left( Id \oplus \underline{\underline{D}}(t) \right)$$

where Id is the identity matrix. For reasons of clarity, the following definition is made: $\left( Id \oplus \underline{\underline{D}}(t) \right) = \underline{\underline{D}}*(t)$. Thus:

$$\underline{\underline{D}}^*(t) = \begin{bmatrix} 1 & \cdots & I_1(n)\cdot\dfrac{1}{2m_1(t)}\left(\Delta m_1(t)-\Delta m_n(t)\right) \\ \vdots & 1 & \vdots \\ I_n(1)\cdot\dfrac{1}{2m_n(t)}\left(\Delta m_n(t)-\Delta m_1(t)\right) & \cdots & 1 \end{bmatrix}$$

$\underline{\underline{D}}^*(t)$ is an estimate of the (current) dynamics of the crowd 4. Thus, an estimate for a future mass of each cell (at the time-step t+2) is:

$$\underline{m}(t+2) \approx \underline{m}(t+1)\cdot\underline{\underline{D}}^*(t) = \left(\underline{m}(t)\cdot\underline{\underline{D}}^*(t)\right)\cdot\underline{\underline{D}}^*(t)$$

$$\Rightarrow \underline{\widetilde{m}}(t+2) = \underline{m}(t)\cdot\left(\underline{\underline{D}}^*(t)\right)^2$$

More generally, future population distribution estimates s steps into the future (i.e. at the time-step t+s) are obtained from the most recently observed distribution and the current best estimate of the underlying dynamics using the formula:

$$\underline{\widetilde{m}}(t+s) = \underline{m}(t)\cdot\left(\underline{\underline{D}}^*(t)\right)^s$$

Thus, a prediction of the future distribution of the mass of the crowd 4 is provided. In particular, a prediction of the value of the cell mass of each cell at a future time-step t+s is provided. This prediction for each cell may be categorised as L, M, H or C as described above at steps s6 and s10.

Thus, a method for modelling movements of large groups based on observable population parameters is advantageously provided. Moreover, the prediction of future movements and distribution of the large groups is advantageously provided.

In this embodiment, the calculations to estimate future population distributions are performed for a fixed number s of time steps into the future. Any incidence of a predicted cell mass being within an interval classified as being of interest or concern (i.e. the "critical" category) is flagged to an operator.

This tends to provide an "early warning" facility that can be used to alert authority of a crowd distribution becoming dangerous at a future time. This in turn allows for pre-emptive action to be taken to alleviate the risk of the dangerous crowd distribution. In other words, the ability to monitor a large group of people and predict where and when the distribution or movement of the crowd might require intervention is provided.

Furthermore, the modelling of movements of large groups and the prediction of future movements and distribution of the large groups may be advantageously performed in real-time. This facilitates the pre-emptive performance of any actions intended to avoid dangerous situations. Moreover, this tends to permit the application of this process in situations where the dynamics of the crowd is itself changing, because the model is updated based on subsequent observation.

An optional process of updating the internal dispersion matrix $\underline{\underline{D}}(t)$ with any subsequent observations made of the crowd 4 using the sensor 6 may be incorporated into the crowd monitoring algorithm as follows.

The internal dispersion matrix $\underline{\underline{D}}(t)$ provides an approximation of the internal dynamics based on a limited quantity of observed evidence at a current and preceding time-step. A better approximation tends to be provided by updating $\underline{\underline{D}}(t)$ at each time step as a new set of cell masses $\underline{m}(t)$ are observed using the sensor 6. In this embodiment, the process of updating the internal dispersion matrix $\underline{\underline{D}}(t)$ at each time-step is performed as follows.

As described above, at a particular time-step the determined cell masses at time-steps t and t+1, i.e. $\underline{m}(t)$ and $\underline{m}(t+1)$, are used to determine the differences in the estimated observed cell masses between time-steps t and t+1 for each cell i, i.e. $\Delta m_i(t)$. In turn, these values are used to produce flux vectors, $\underline{Fl}_i(t)$. The flux vectors $\underline{Fl}_i(t)$ are used to determine an estimate of the internal dispersion matrix $\underline{\underline{D}}(t)$.

Thus, at each time step an estimate of the internal dispersion matrix, $\underline{D(t)}$ is determined. For example, at the time-step t+1 the estimates $\underline{\underline{D}}(0), \underline{\underline{D}}(1),...., \underline{\underline{D}}(t)$ may have been made for the internal dispersion matrix at the current and previous time-steps.

A more accurate internal dispersion matrix for predicting the distribution of the cell mass at future time-steps may, in certain situations, be provided by an updated internal dispersion matrix, $\underline{\underline{D}}^t$ which is determined as:

$$\underline{\underline{D}}^t = \frac{1}{t+1}\left[\underline{\underline{D}}(0) \oplus \underline{\underline{D}}(1) \oplus .... \oplus \underline{\underline{D}}(t)\right]$$

where $\oplus$ denotes matrix addition.

Each element of $\underline{\underline{D}}^t$ is an average local flux vector over the $t + 1$ estimates that have so far been made.

Advantageously, the matrix $\underline{\underline{D}}^t$ may be determined recursively as:

$$\underline{\underline{D}}^t = \frac{1}{t+1}\left[\underline{\underline{D}}(t) \oplus t \cdot \underline{\underline{D}}^{t-1}\right] = \frac{1}{t+1} \cdot \underline{\underline{D}}(t) \oplus \frac{t}{t+1} \cdot \underline{\underline{D}}^{t-1}$$

Using $\underline{\underline{D}}^t$ to predict future cell masses may, in certain situations, be more accurate or more convenient than using the non-updated estimate of the internal dispersion matrix, $\underline{\underline{D}}(t)$.

Alternative instantiations may be more suitable to particular operational contexts. For example, calculating the dispersion matrix from those estimates of $\underline{D(t)}$ over some set number n of prior time-steps, where $0 \le n < t$. In this case, the internal flux estimates $\underline{\underline{D}}(t-n), \underline{\underline{D}}(t-n+1),...., \underline{\underline{D}}(t)$ are used, with the updated internal dispersion matrix $\underline{\underline{D}}^t$ having the form:

$$\underline{\underline{D}}^t = \frac{1}{n+1}\left[\underline{\underline{D}}(t-n) \oplus \underline{\underline{D}}(t-n+1) \oplus .... \oplus \underline{\underline{D}}(t)\right]$$

*When n = t this formula for* $\underline{\underline{D}}^t$ *is similar to that given above.*

Advantageously, when $n \ne t$, the matrix $\underline{\underline{D}}^t$ may still be determined recursively using the formula:

$$\underline{\underline{D}}^t = \underline{\underline{D}}^{t-1} \oplus \frac{1}{n+1} \cdot \left[\underline{\underline{D}}(t) \oplus -\underline{\underline{D}}(t-n-1)\right]$$

Alternatively, a particular time-step T when the underlying dynamics are believed to have changed may be identified as a critical threshold for which earlier internal flux estimates are considered irrelevant, where $0 \le T < t$. In this case, the internal dispersion matrices used are $\underline{\underline{D}}(T), \underline{\underline{D}}(T+1),...., \underline{\underline{D}}(t)$, and the updated internal dispersion matrix

$\underline{\underline{D}}^t$ has the form:

$$\underline{\underline{D}}^t = \frac{1}{m+1}\left[\underline{\underline{D}}(T) \oplus \underline{\underline{D}}(T+1) \oplus .... \oplus \underline{\underline{D}}(t)\right],$$

where m=t-T

When $T$ = 0 this formula for $\underline{\underline{D}}^t$ is similar to that given above.

Advantageously, the matrix $\underline{\underline{D}}^t$ may be determined recursively as:

$$\underline{\underline{D}}^t = \frac{1}{m+1}\left[\underline{\underline{D}}(t) \oplus m \cdot \underline{\underline{D}}^{t-1}\right] = \frac{1}{m+1} \cdot \underline{\underline{D}}(t) \oplus \frac{m}{m+1} \cdot \underline{\underline{D}}^{t-1}$$

The estimation of the future population distribution s time-steps into the future (i.e. at the time-step t+s) that is determined at step s16 as described above may alternatively be obtained from the most recently observed distribution and the current best estimate of the underlying dynamics using the formula:

$$\widetilde{\underline{m}}(t + s) = \underline{m}(t) \cdot \left(\left(\underline{\underline{D}}*\right)^t\right)^s$$

where:

$$\left(\underline{\underline{D}}*\right)^t = \left(Id \oplus \underline{\underline{D}}^t\right)$$

for any of the possible formulations of $\underline{\underline{D}}^t$ defined above.

Advantageously, the matrix $\left(\underline{\underline{D}}*\right)^t$ may, in suitable applications, provide a more accurate approximation about the future cell mass distribution than the non-updated matrix $\underline{\underline{D}}*$.

The equation $\widetilde{\underline{m}}(t + s) = \underline{m}(t) \cdot \left(\left(\underline{\underline{D}}*\right)^t\right)^s$ may be equivalently represented

$\widetilde{\underline{m}}(t+s)^T = \left(\left(\left(\underline{\underline{D}}*\right)^t\right)^s\right)^T \cdot \underline{m}(t)^T$. This formulation advantageously allows for easier implementation of the crowd monitoring algorithm (depending on the software used).

Moreover, representing the dynamics of the crowd 4 as a Markovian state machine tends to be facilitated. This advantageously allows for the applications of existing techniques for analysing the long term behaviour of state machines and existing techniques for predicting when the current dynamics of a system are tending towards unsafe configurations. For example, techniques that identify and propose actions to avoid dangerous or unwanted states could be applied to avoid dangerous or unwanted crowd distributions. Such techniques may alert an authority to situations where, without intervention, crowd density is likely to become unsafe or unwanted.

Apparatus, including the processor 8, for performing the method steps of Figure 2 and/or Figure 6 may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

It should be noted that certain of the process steps depicted in the flowcharts of Figure 2 and/or Figure 6 and described above may be omitted or such process steps may be performed in differing order to that presented above and shown in Figures 2 and Figure 6. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, a crowd of people is monitored. However in other embodiments, a relatively large population or amount of any entity may be monitored and the future distributions of those entities may be predicted.

In the above embodiments, the area of interest only comprises the crowd. However, in other embodiments the area of interest (of any size or shape) may additionally include other elements, for example terrain features or objects that in some way affect, limit, or restrict the movement of the crowd in some parts or all of the area of interest.

In the above embodiments, the area of interest is two-dimensional. However, in other embodiments the area of interest is three-dimensional.

In the above embodiments, the crowd move within the area of interest. However, in other embodiments some or all of the members of the crowd may move out of the area of interest. Also in other embodiments new members of the crowd may move into the area of interest. In these embodiments, the flux across the boundary of the area of interest is incorporated, for example by representing the flux across external boundaries as the flux between each boundary cell and a virtual cell or cells representing the external environment, calculated in a similar way to the internal flux estimates described above.

In the above embodiments, the crowd moves in an irregular manner. However, in other embodiments the crowd moves in a regular manner.

In the above embodiments, a single sensor is used to take measurements of the crowd. However, in other embodiments more than one sensor or other appropriate device is used to take measurements of the crowd.

In the above embodiments, the sensor is an infra-red sensor which is used to measure an infra-red intensity level. However, in other embodiments the sensor is a different appropriate type of sensor which is used to measure a different appropriate parameter.

In the above embodiments, the cell lattice is a four-by-four square grid of cells. However, in other embodiments the cell lattice comprises any number of the same or differently sized cells arranged in any appropriate configuration.

In the above embodiments, the cell lattice covers entirely the area of interest. However, in other embodiments the cell lattice covers the area of interest partially. Moreover, in other embodiments the cell lattice comprises more than one discrete sub-lattice of cells.

In the above embodiments, the data corresponding to the distribution of the crowd that is generated using the sensor is the observed cell mass, i.e. the proportion of the cell that is "full". However, in other embodiments different appropriate data is used, for example the number of individual members of the crowd in each cell.

In the above embodiments, measurements of the cell mass are taken at discrete points in time, for example, the time-steps t, t+1,etc. However, in other embodiments, measurements of the cell mass may be taken continuously. Also, in other embodiments the internal dispersion matrix, $\underline{D(t)}$ may be determined continuously. Also, in other embodiments the updated internal dispersion matrix, $\underline{\underline{D}}^t$ may be determined and updated continuously.

In the above embodiments, a cell is categorised as low-risk, medium risk, high-risk, or critical depending on the values of observed cell mass estimated for that cell. However, in other embodiments a cell is categorised in a different way, for example in other embodiments there are more or fewer differently named categories, and/or there are different cell mass ranges for the different categories. Also, in other embodiments one or more cells may have different categorisation criteria from other cells. In other embodiments, the cells are not categorised. For example, in other embodiments the number or density of members of the crowd in each cell may be measured and predicted directly.

In the above embodiments, the flux between the $i$th and jth cell was determined between the time-steps t and t+1. However, in other embodiments other time-step intervals may be used. For example, the flux between the $i$th and jth cell may be determined between the time-steps t and t+2, and measurements in the cells at t+1 may be ignored. In this case the neighbourhood of the cells may be increased to account for the extended time period in which members of the crowd may move, and hence the extended distance over which members of the crowd may travel.

In the above embodiments, the neighbourhood of a cell is defined to be the set of cells from which members of the crowd may move into that cell between one time-step and the next, and/or a set of cells into which members of the crowd may move from that cell between one time-step and the next. However, in other embodiments, a different appropriate definition of "neighbourhood" may be used. For example, in other embodiments a neighbourhood of a cell may be the set of cells that abut that cell.

In the above embodiments, the overall external flux $\Delta M_{ij}$ (i.e. the overall gain or loss of cell mass from the $i$th and jth cells that is not attributable to movement between the $i$th and jth cells) is equally accounted for by each of the $i$th and jth cells. In other words, each of the $i$th and jth cells are assigned an external flux value of $\frac{1}{2}\Delta M_{ij}$. However, in other embodiments, the overall external flux $\Delta M_{ij}$ is not equally accounted for by each of the $i$th and jth cells. For example, in other embodiments, a greater portion of the external flux is attributed to the $i$th cell than the $j$th cell, or vice versa.

## Claims

1. A method for processing a distribution of a population, the population (4) being distributed over a region of interest (2), the region of interest (2) being divided into a plurality of cells, the method comprising:

   measuring, at two different points in time, respective values of a measure of population intensity in each cell of a plurality of the cells;
   for a cell in the plurality, determining a vector of values, wherein each value in the vector is a function of the population intensity values measured in that cell at the two different points in time and the population intensity values measured in a different cell at the two different points in time;
   determining a matrix using the determined vector(s) of values and using the population intensity values measured at one of the two different points in time in the cells for which the vectors of values were determined; and
   predicting, using the determined matrix and using the value of the population intensity measured in a cell in the plurality at either of the two different points in time, a value for the measure of population intensity in that cell for a point in time different to the two different points in time.

2. A method according to claim 1, wherein the step of determining a matrix is performed using the population intensity values measured at the earlier of the two different points in time in the cells for which the vectors of values were determined.

3. A method according to claim 1 or 2, wherein a value in a vector of values is a flux value determined using the formula:

$$Fl_{ij} = \frac{1}{2}\left(\Delta m_i(t) - \Delta m_j(t)\right)$$

   where: $Fl_{ij}$ is a flux value of the flux between the an $i$th cell and a $j$th cell; and

$$\Delta m_i(t) = m_i(t') - m_i(t) \text{ and } \Delta m_j(t) = m_j(t') - m_j(t)$$

   where:

   $m_i(t)$ is the measured value of the measure of population intensity in the $i$th cell (12) at a time t;
   $m_i(t')$ is the measured value of the measure of population intensity in the $i$th cell (12) at a time t';
   $m_j(t)$ is the measured value of the measure of population intensity in the $j$th cell (14) at the time t; and
   $m_j(t')$ is the measured value of the measure of population intensity in the jth cell (14) at the time t'.

4. A method according to claim 3, wherein the vector of flux values is determined as:

$$\underline{Fl}_i(t) = \left(Fl_{i1}, ...., Fl_{im}\right)$$

   where: $Fl_{ij}$ for $j \in \{1, ..., m\}$ are flux values of the flux between the $i$th cell (12) and the $j$th cell (14), wherein the $j$th cell (14) is a cell in the set of cells that influence the value of the measure of population intensity in the $i$th cell (12) between the two different points in time.

**5.** A method according to any of claims 1 to 4, wherein a vector of values is determined as:

$$\underline{Fl}_i^+(t) = \left[ \mathrm{I}_i(j) \cdot \frac{1}{2} \left( \Delta m_i(t) - \Delta m_j(t) \right) \right]_j$$

where:

$$\Delta m_i(t) = m_i(t') - m_i(t) \text{ and } \Delta m_j(t) = m_j(t') - m_j(t)$$

where:

$m_i(t)$ is the measured value of the measure of population intensity in the $i$th cell (12) at a time t;
$m_i(t')$ is the measured value of the measure of population intensity in the $i$th cell (12) at a time t';
$m_j(t)$ is the measured value of the measure of population intensity in the $j$th cell (14) at the time t; and
$m_j(t')$ is the measured value of the measure of population intensity in the jth cell (14) at the time t'; and
$\mathrm{I}_i(j)$ is an indicator function:

$$\mathrm{I}_i(j) = \begin{cases} 1 & j \in nbhd(i) \\ 0 & j \notin nbhd(i) \end{cases}$$

where $nbhd(i)$ is a set of cells that influence the value of the measure of population intensity in the $i$th cell (12) between the two different points in time.

**6.** A method according to claim 5, wherein the step of determining a matrix comprises determining a matrix:

$$\underline{\underline{D}}(t) = \begin{bmatrix} \underline{PFl}_1(t) \\ \vdots \\ \underline{PFl}_n(t) \end{bmatrix}, \text{ where } \underline{PFl}_i(t) = \begin{cases} 0 & m_i(t) = 0 \\ \dfrac{1}{m_i(t)} \underline{Fl}_i^+(t) & m_i(t) \neq 0 \end{cases}$$

**7.** A method according to claim 6, wherein the step of determining a matrix comprises determining a matrix $\underline{\underline{D}}^t$ as either:

$$\underline{\underline{D}}^t = \frac{1}{t+1} \left[ \underline{\underline{D}}(0) \oplus \underline{\underline{D}}(1) \oplus \dots \oplus \underline{\underline{D}}(t) \right]$$

or

$$\underline{\underline{D}}^t = \frac{1}{t+1} \left[ \underline{\underline{D}}(t) \oplus t \cdot \underline{\underline{D}}^{t-1} \right] = \frac{1}{t+1} \cdot \underline{\underline{D}}(t) \oplus \frac{t}{t+1} \cdot \underline{\underline{D}}^{t-1}$$

or

$$\underline{\underline{D}}^{t} = \frac{1}{n+1}\left[\underline{\underline{D}}(t-n) \oplus \underline{\underline{D}}(t-n+1) \oplus \dots \oplus \underline{\underline{D}}(t)\right]$$

or

$$\underline{\underline{D}}^{t} = \underline{\underline{D}}^{t-1} \oplus \frac{1}{n+1} \cdot \left[\underline{\underline{D}}(t) \oplus -\underline{\underline{D}}(t-n-1)\right]$$

or

$$\underline{\underline{D}}^{t} = \frac{1}{m+1}\left[\underline{\underline{D}}(T) \oplus \underline{\underline{D}}(T+1) \oplus \dots \oplus \underline{\underline{D}}(t)\right]$$

or

$$\underline{\underline{D}}^{t} = \frac{1}{m+1}\left[\underline{\underline{D}}(t) \oplus m \cdot \underline{\underline{D}}^{t-1}\right] = \frac{1}{m+1} \cdot \underline{\underline{D}}(t) \oplus \frac{m}{m+1} \cdot \underline{\underline{D}}^{t-1}$$

where:

$n$ is a number of prior time-steps to average over, with $0 \le n < t$;
$m = t - T$ for $T$ a threshold value such that $0 \le T < t$ ; and

$$\underline{\underline{D}}(t) = \begin{bmatrix} \underline{PFl}_{1}(t) \\ \vdots \\ \underline{PFl}_{n}(t) \end{bmatrix}, \text{ where } \underline{PFl}_{i}(t) = \begin{cases} 0 & m_{i}(t)=0 \\ \dfrac{1}{m_{i}(t)}\underline{Fl}_{i}^{+}(t) & m_{i}(t) \neq 0 \end{cases}$$

**8.** A method according to claim 6 or 7, wherein the step of predicting a value for the measure of population intensity in that cell for a point in time different to the two different points in time comprises determining:

$$\underline{\widetilde{m}}(t+s) = \underline{m}(t) \cdot \left(\underline{\underline{D}}*(t)\right)^{s}$$

where:

$\underline{\underline{D}}*(t) = \left(Id \oplus \underline{\underline{D}}(t)\right)$ where $Id$ is the identity matrix; and
s is a number of time-steps.

**9.** A method according to claim 7 or claim 8 when dependent on claim 7, wherein the step of predicting a value for the measure of population intensity in that cell for a point in time different to the two different points in time comprises determining:

$$\widetilde{m}(t+s) = \underline{m}(t) \cdot \left(\left(\underline{\underline{D}}*\right)^t\right)^s$$

where:

$\left(\underline{\underline{D}}*\right)^t = \left(Id \oplus \underline{\underline{D}}^t\right)$ where *Id* is the identity matrix; and

s is a number of time-steps.

10. A method according to any of claims 1 to 9 wherein the measure of population intensity is a number of people.

11. A method of managing a population distribution for a population (4) distributed over a plurality of cells, the method comprising:

   performing a method for processing a distribution of a population according to any of claims 1 to 10; and
   performing an act based on the predicted values of the measure of population intensity.

12. Apparatus for processing a distribution of a population (4), the population (4) being distributed over a region of interest (2), the region of interest (2) being divided into a plurality of cells, the apparatus comprising a processor (8) for performing a method according to any of claims 1 to 11 and sensing means (6) for measuring a value of a measure of population intensity in each of the plurality of the cells at two different points in time.

13. Apparatus for managing a population distribution for a population (4) distributed over a plurality of cells, the apparatus comprising:

   an apparatus for processing a distribution for a population (4) according to claim 12; and
   means for performing an act based on the predicted values of the measure of population intensity such that the actual value of the measure of population intensity at the point in time different to the two different points in time is different to the predicted value of the measure of population intensity.

14. A program or plurality of programs arranged such that when executed by a computer system or one or more processors it/they cause the computer system or the one or more processors to operate in accordance with the method of any of claims 1 to 11.

15. A machine readable storage medium storing a program or at least one of the plurality of programs according to claim 14.

**FIG. 1**

EP 2 466 526 A1

START

DEFINE CELL LATTICE OVER AREA OF
INTEREST
s2

AT T=0, ESTIMATE NUMBER OF PEOPLE IN
EACH CELL
s4

AT T=0, CATAGORISE EACH CELL
ACCORDING TO NUMBER OF PEOPLE
s6

AT T=1, ESTIMATE NUMBER OF PEOPLE IN
EACH CELL
s8

AT T=1, CATAGORISE CELL ACCORDING
TO NUMBER OF PEOPLE
s10

DETERMINE A TOTAL FLUX VECTOR FOR
EACH CELL
s12

DETERMINE INTERNAL DISPERSION MATRIX
s14

PREDICT FUTURE DISTRIBUTION OF
CROWD
s16

END

FIG. 2

FIG. 4

FIG. 3

**FIG. 5**

| | | | |
|---|---|---|---|
| M | M | L | L |
| M | H | H | M |
| M | H | H | M |
| L | M | M | L |

10

2

t = 1

EP 2 466 526 A1

```
                                                              ┌─ s20
        ┌─────────────────────────────────────────┐
        │   FOR THE iTH AND jTH CELLS, DETERMINE    │
        │   THE DIFFERENCE IN CELL MASS BETWEEN     │
        │      TWO CONSECUTIVE TIME-STEPS           │
        └─────────────────────────────────────────┘
                          │
                          ▼                           ┌─ s22
        ┌─────────────────────────────────────────┐
        │     DETERMINE THE COMBINED MASSES OF      │
        │      EACH OF THE iTH AND jTH CELLS        │
        └─────────────────────────────────────────┘
                          │
                          ▼                           ┌─ s24
        ┌─────────────────────────────────────────┐
        │    DETERMINE AN OVERALL EXTERNAL FLUX     │
        │        FOR THE iTH AND jTH CELLS          │
        └─────────────────────────────────────────┘
                          │
                          ▼                           ┌─ s26
        ┌─────────────────────────────────────────┐
        │     DETERMINE THE NET RELATIVE FLUX       │
        │      BETWEEN THE iTH AND jTH CELLS        │
        └─────────────────────────────────────────┘
                          │
                          ▼                           ┌─ s28
        ┌─────────────────────────────────────────┐
        │     DETERMINE THE TOTAL FLUX FOR THE      │
        │                iTH CELL                   │
        └─────────────────────────────────────────┘
                          │
                          ▼
```

**FIG. 6**

**FIG. 7**

Europäisches
Patentamt

European
Patent Office

Office européen
des brevets

# EUROPEAN SEARCH REPORT

Application Number

EP 10 27 5129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/038558 A1 (UNITED TECHNOLOGIES CORP [US]; TOMASTIK ROBERT N [US]) 26 March 2009 (2009-03-26) * Whole document: In particular Equation 6 * | 1-15 | INV. G06K9/00 |
| X | DAVIES A C ET AL: "CROWD MONITORING USING IMAGE PROCESSING", ELECTRONICS AND COMMUNICATION ENGINEERING JOURNAL, INSTITUTION OF ELECTRICAL ENGINEERS, LONDON, GB, vol. 7, no. 1, 1 February 1995 (1995-02-01), pages 37-47, XP000500769, ISSN: 0954-0695, DOI: DOI:10.1049/ECEJ:19950106 * In particular Sections 3, 4 and 5. Figures 12 and 14. Equation 5 * | 1,2, 10-15 | |
| X | XINYU WU ET AL: "Crowd Density Estimation Using Texture Analysis and Learning", ROBOTICS AND BIOMIMETICS, 2006. ROBIO '06. IEEE INTERNATIONAL CON FERENCE ON, IEEE, PI, 1 December 2006 (2006-12-01), pages 214-219, XP031068788, ISBN: 978-1-4244-0570-1 * In particular, Figure 3, Sections IV and V * | 1,2, 10-15 | TECHNICAL FIELDS SEARCHED (IPC) G06K G06Q |

-/--

The present search report has been drawn up for all claims

| Place of search | Date of completion of the search | Examiner |
|---|---|---|
| The Hague | 11 February 2011 | Thean, Andrew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 10 27 5129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BEIBEI ZHAN ET AL: "Crowd analysis: a survey", MACHINE VISION AND APPLICATIONS, SPRINGER, BERLIN, DE, vol. 19, no. 5-6, 10 April 2008 (2008-04-10), pages 345-357, XP019651735, ISSN: 1432-1769, DOI: DOI:10.1007/S00138-008-0132-4 * Section 3 * ----- | 1-15 | |

TECHNICAL FIELDS
SEARCHED     (IPC)

The present search report has been drawn up for all claims

| Place of search | Date of completion of the search | Examiner |
|---|---|---|
| The Hague | 11 February 2011 | Thean, Andrew |

EPO FORM 1503 03.82 (P04C01)

**ANNEX TO THE EUROPEAN SEARCH REPORT
ON EUROPEAN PATENT APPLICATION NO.**                    EP 10 27 5129

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2011

| Patent document cited in search report | | Publication date | Patent family member(s) | | Publication date |
|---|---|---|---|---|---|
| WO 2009038558 | A1 | 26-03-2009 | CA | 2700342 A1 | 26-03-2009 |
| | | | CA | 2705613 A1 | 26-03-2009 |
| | | | CA | 2705614 A1 | 26-03-2009 |
| | | | CN | 101861594 A | 13-10-2010 |
| | | | CN | 101861606 A | 13-10-2010 |
| | | | CN | 101861607 A | 13-10-2010 |
| | | | US | 2010250481 A1 | 30-09-2010 |
| | | | WO | 2009038597 A1 | 26-03-2009 |
| | | | WO | 2009038598 A1 | 26-03-2009 |